# EUROPÄISCHE PATENTSCHRIFT

(11) **EP 1 195 885 B1**
(45) Veröffentlichungstag und Bekanntmachung des Hinweises auf die Patenterteilung: **02.05.2003**
(21) Anmeldenummer: 01120021.9
(22) Anmeldetag: 20.08.2001
(51) Int. Cl.: H02M 7/12, H02M 3/335

(54) **Synchrongleichrichterschaltung**
Synchronuous rectifyer circuit
Circuit redresseur synchrone

(30) Priorität: 29.09.2000 DE 10048404
(43) Veröffentlichungstag der Anmeldung: 10.04.2002
(73) Patentinhaber: Patent-Treuhand-Gesellschaft für elektrische Glühlampen mbH, 81543 München (DE)
(72) Erfinder: Haeusser-Boehm, Helmut, Dr., 81547 München (DE)

(56) Entgegenhaltungen:
- PATENT ABSTRACTS OF JAPAN vol. 1998, no. 11, 30. September 1998 (1998-09-30) & JP 10 174431 A (OKI ELECTRIC IND CO LTD), 26. Juni 1998 (1998-06-26)
- PATENT ABSTRACTS OF JAPAN vol. 1997, no. 10, 31. Oktober 1997 (1997-10-31) & JP 09 163731 A (MURATA MFG CO LTD), 20. Juni 1997 (1997-06-20)

## Beschreibung

Die vorliegende Erfindung betrifft eine Gleichrichterschaltung, insbesondere eine Gleichrichterschaltung mit einem Übertrager, der eine Primärseite und eine Sekundärseite aufweist, wobei die Primärseite einen ersten und einen zweiten Eingangsanschluß zum Einkoppeln eines Wechselspannungssignals aufweist und die Sekundärseite zwei Sekundärwicklungen umfaßt, die miteinander und mit einem ersten Ausgangsanschluß verbunden sind, wobei die erste und die zweite Sekundärwicklung mit ihrem anderen Anschluß mit einem ersten Anschluß einer in Flußrichtung angeordneten ersten und zweiten Diode verbunden sind und der zweite Anschluß der ersten und der zweiten Diode miteinander und mit einem zweiten Ausgangsanschluß verbunden sind, wobei zwischen dem ersten und dem zweiten Ausgangsanschluß eine Last koppelbar ist, wobei die erste und die zweite Diode zumindest innerhalb eines vorgegebenen Zeitbereichs durch einen ersten und zweiten MOSFET realisiert sind, dadurch daß jeder MOSFET einen Hauptstrompfad mit einer Hauptstromrichtung HS und einen zum Hauptstrompfad parallel angeordneten Nebenstrompfad mit einer Nebenstromrichtung NS und mit einer darin angeordneten Bodydiode aufweist, wobei die Hauptstromrichtung HS und die Nebenstromrichtung NS entgegengesetzt zueinander verlaufen und der erste und der zweite MOSFET so betreibbar sind, daß die erste und die zweite Bodydiode innerhalb des vorgegebenen Zeitbereichs die erste und die zweite Diode realisieren.

### Stand der Technik

Aus der Literatur ist eine Gleichrichterschaltung unter dem Namen Einphasen-Mittelpunktschaltung bekannt. Derartige Gleichrichterschaltungen werden beispielsweise eingesetzt, um lange Schienen- und Seilsysteme mit elektronischen Transformatoren zu speisen. Hierbei dienen sie der Gleichrichtung und Glättung der hochfrequenten Ausgangsspannung. Ohne diese beiden Maßnahmen wäre der Spannungsabfall längs der Leitung und die Funkstörung zu hoch.

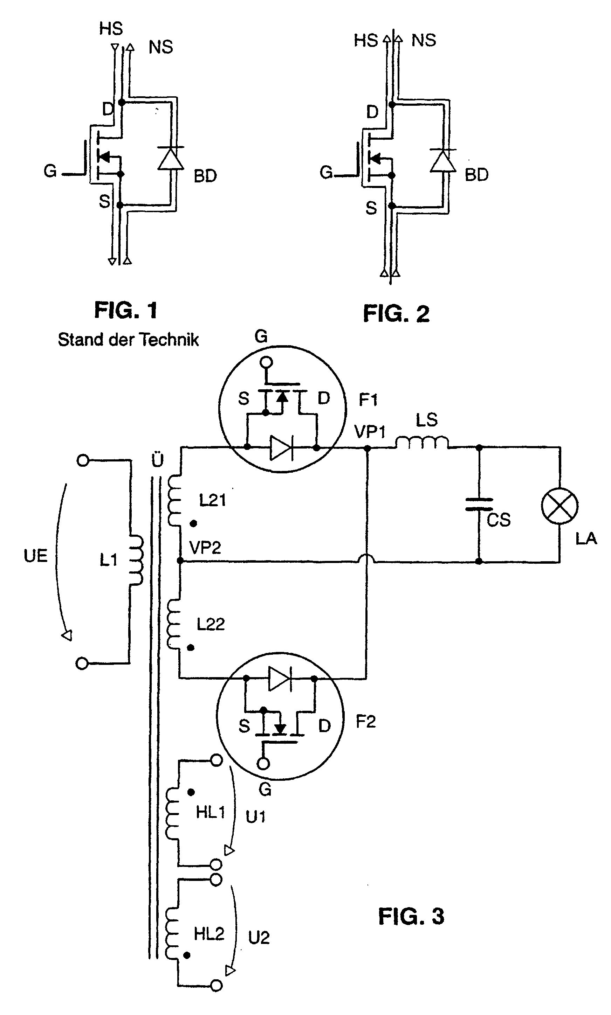

In einer derartigen Gleichrichterschaltung werden die für die Gleichrichtung benötigten Dioden häufig durch MOSFET ersetzt und hier speziell durch die in jedem MOSFET vorhandene Bodydiode. In Fig. 1 ist beispielhaft ein MOSFET dargestellt, wobei die drei Anschlüsse D für Drain, G für Gate und S für Source gekennzeichnet sind. Die Bodydiode trägt die Bezeichnung BD. Die Richtung, in der der MOSFET normalerweise vom Strom durchflossen wird, die sogenannte Hauptstromrichtung HS, verläuft von Drain zu Source. Die Nebenstromrichtung NS ist parallel angeordnet und verläuft entgegengesetzt zur Hauptstromrichtung HS, wie durch die Pfeile gekennzeichnet. Wird in dieser Schaltung das Gate mit keinem Signal angesteuert, so wirkt der MOSFET über seine Bodydiode BD wie eine normale Diode, d.h. er läßt Stromfluß zu nur in einer Richtung und zwar in der wie oben definierten Nebenstromrichtung NS. Der Nachteil dieser aus dem Stand der Technik bekannten Gleichrichterschaltung besteht in der hohen Verlustleistung. Um die an den Schienen- und Seilsystemen angebrachten Lampen mit ausreichend Leistung versorgen zu können, fließen in der Gleichrichterschaltung recht hohe Ströme, beispielsweise im Bereich zwischen 20 und 40 A. Bei einem Strom von beispielsweise 25 A entsteht daher an der Diode, bei einem Spannungsabfall an der Diode von 0,7 V, eine Verlustleistung von 17,5 W.

Die gleichen Probleme ergeben sich bei elektronischen Transformatoren für Schienen- und Seilsysteme, bei denen die Gleichrichtung mit Schottky-Dioden realisiert ist. Als Folge der hohen Verlustleistung kommt entweder nur ein Einsatz bei niedrigen Umgebungstemperaturen in Betracht oder es muß ein Ventilator zur Kühlung verwendet werden, dessen Lebensdauer sehr beschränkt ist und zwischen 10.000 und 20.000 Stunden liegt.

### Darstellung der Erfindung

Ausgehend von diesem Stand der Technik besteht daher die Aufgabe der vorliegenden Erfindung darin, eine Gleichrichterschaltung der eingangs genannten Art derart weiterzubilden, daß die Verlustleistung deutlich reduziert ist.

Diese Aufgabe wird erfindungsgemäß dadurch gelöst, daß eine gattungsgemäße Gleichrichterschaltung weiterhin eine erste und eine zweite Ansteuerschaltung umfaßt, die ausgelegt sind, den ersten und den zweiten MOSFET mit Bezug auf den Stromfluß im Hauptstrompfad derart anzusteuern, daß der Stromfluß im Hauptstrompfad in der Nebenstromrichtung NS erfolgt.

Der Erfindung liegt die Erkenntnis zugrunde, daß zur Realisierung einer Diodenfunktion nicht nur die in Nebenstromrichtung NS liegende Bodydiode eines MOSFET eingesetzt werden kann, sondern durch aktive Ansteuerung in geeigneter Weise auch der Hauptstrompfad eines MOSFET. Sie basiert weiterhin auf der Erkenntnis, daß MOSFET bezüglich ihrer Hauptstromrichtung HS, die vom Drain zur Source verläuft, auch invers betrieben werden können ohne Schaden zu nehmen. Die Ansteuerung für den Inversbetrieb entspricht hierbei der Ansteuerung bei Vorwärtsbetrieb, d.h. die maßgebliche Spannung ist die Spannung, die am MOSFET zwischen Gate und Source anliegt. Indem der MOSFET durch geeignete Ansteuerung des Gates in den leitenden Zustand geschaltet wird, hat daher der ihn durchfließende Strom lediglich einen sehr geringen Flußwiderstand zu überwinden, der größenordnungsmäßig bei 6 mΩ liegt. Für den oben beispielhaft angenommenen Strom von 25 A ergibt sich dadurch eine Verlustleistung von lediglich 3,7 W. Diese geringe Verlustleistung ermöglicht den Betrieb einer erfindungsgemäßen Gleichrichterschaltung selbst bei hohen Umgebungstemperaturen ohne Verwendung eines Ventilators.

Bei einer bevorzugten Ausführungsform ist die erste und die zweite Ansteuerschaltung derart betreibbar, daß zumindest in einem ersten Zeitbereich der Stromfluß durch den jeweiligen MOSFET im Hauptstrompfad in der Nebenstromrichtung NS und im zweiten Zeitbereich im Nebenstrompfad in der Nebenstromrichtung NS erfolgt. Durch diese Maßnahme wird ermöglicht, daß die Diodenfunktion in einem ersten Zeitbereich - durch geeignete Ansteuerung des Gates - durch den Hauptstrompfad, in einem zweiten Zeitbereich in üblicher Weise durch die Bodydiode des MOSFET realisierbar ist. Die Realisierung der Diodenfunktion durch die Bodydiode ist selbstverständlich im Hinblick auf die Reduzierung der Verlustleistung nur dann in Betracht zu ziehen, wenn der den MOSFET insgesamt durchfließende Strom einen sehr kleinen Wert aufweist oder der Zeitbereich in dem der Strom fließt sehr kurz ist und damit die Verlustleistung dieses Stroms an der Bodydiode sehr gering ist. Dies ist insbesondere beim Umschwingen des Stroms von einem Transistor auf den anderen der Fall.

Bevorzugt ist weiterhin vorgesehen, daß die erste und die zweite Ansteuerschaltung derart betreibbar sind, daß zumindest in einem dritten Zeitbereich keinerlei Stromfluß durch den jeweiligen MOSFET stattfindet.

Bei einer besonders vorteilhaften Ausführungsform umfassen die erste und die zweite Ansteuerschaltung eine erste und eine zweite mit dem Übertrager verbundene Hilfswicklung. Dies ermöglicht bei sehr geringem Aufwand die Erzeugung der Ansteuersignale für die beiden MOSFET. Bei Übertragung eines großen Stroms durch den Übertrager wird durch die Hilfswicklungen ein großes Signal erzeugt, was zur Ansteuerung der Gate-Elektrode des jeweiligen MOSFET verwendet wird. Mit diesem großen Signal lassen sich die MOSFET völlig problemlos in den leitenden Zustand schalten, weshalb der ja genau in diesem Moment durch die MOSFET fließende Strom den MOSFET im Hauptstrompfad durchläuft, allerdings in Nebenstromrichtung NS. Wird mit dem Übertrager lediglich ein sehr kleiner Strom übertragen, reicht das über die Hilfswicklungen gewonnene Signal unter Umständen nicht aus, um durch Ansteuerung der jeweiligen Gate-Elektrode den jeweiligen MOSFET in den leitenden Zustand zu schalten. Dies ist vorliegend jedoch völlig unproblematisch, da genau dann auch der Strom klein ist, der den jeweiligen MOSFET nunmehr im Nebenstrompfad in Nebenstromrichtung NS durchfließt und damit an der Bodydiode nur einen geringe Verlustleistung entsteht. Wenn die beiden Hilfswicklungen überdies potentialmäßig der Sekundärseite zugeordnet sind, ist auf diesem Weg auf besonders preisgünstige und einfache Weise die galvanische Trennung zwischen Primärseite und Sekundärseite realisiert. Alternativ kann jedoch auch vorgesehen werden, die für dieAnsteuerung der MOSFET benötigten Signale auf der Primärseite des Übertragers über entsprechende Logikgatter zu generieren und über sehr schnelle Opto-Koppler oder sogenannte SELV(Security Extra Low Voltage)-Übertrager auf die Sekundärseite zu übertragen. Bei der Verwendung von Opto-Kopplern ist bevorzugt, auf der Sekundärseite von der Ausgangsspannung aus eine Versorgungsspannung aufzubauen, die die jeweilige Ansteuerschaltung versorgt.

Die jeweilige Ansteuerschaltung umfaßt bevorzugt ein zwischen der jeweiligen Hilfswicklung und dem jeweiligen MOSFET angeordnetes jeweiliges Modifikationsnetzwerk zum Modifizieren des Ausgangssignales der jeweiligen Hilfswicklung. Insbesondere kann mit einem derartigen Modifikationsnetzwerk erreicht werden, daß die von den Hilfswicklungen bereitgestellte Spannung nichtlinear anwächst, um selbst bei Übertragung niedriger Ströme eine Spannung zur Verfügung zu stellen, die ausreicht, um den jeweiligen MOSFET in den leitenden Zustand zu schalten. Weiterhin sollte das jeweilige Modifikationsnetzwerk eine Spannungsbegrenzung vorsehen, damit keine zu hohe Spannung an das Gate des jeweiligen MOSFET angelegt wird, was zu dessen Zerstörung führen könnte. Insbesondere ist es bevorzugt, das Modifikationsnetzwerk so zu dimensionieren, daß die an das Gate des jeweiligen MOSFET zu koppelnde Spannung in nichtlinearer Weise schnell über 10 V steigt und bei 18 V begrenzt wird.

Das erste und zweite Modifikationsnetzwerk ist gemäß einer besonders bevorzugten Ausführungsform derart ausgelegt, daß während eines Umschwingens des Stroms von dem ersten MOSFET auf den zweiten und umgekehrt immer mindestens einer der beiden MOSFET leitend geschaltet ist. Durch diese Maßnahme wird sichergestellt, daß auch in der sogenannten Totzeit der Stromfluß nicht über den Nebenstrompfad, d.h. über die Bodydiode erfolgt, sondern über den Hauptstrompfad. Das heißt auch während der Totzeit fällt als Verlustleistung lediglich das Produkt aus Flußwiderstand eines MOSFET und ihn durchfließenden Strom an.

Bevorzugt wird dies dadurch erreicht, daß das erste und das zweite Modifikationsnetzwerk derart ausgelegt sind, daß ein Umschalten des ersten und zweiten MOSFET vom leitenden in den sperrenden Zustand und/oder umgekehrt im wesentlichen in zwei Stufen erfolgt, wobei die erste Stufe mit dem Umschwingen vom leitenden in den sperrenden Zustand korreliert ist, während die zweite Stufe mit dem leitenden oder sperrenden Zustand des jeweiligen MOSFET korreliert ist.

Weitere vorteilhafte Ausführungsformen ergeben sich aus den Unteransprüchen.

### Beschreibung der Zeichnungen

Im Folgenden wird ein Ausführungsbeispiel unter Hinweis auf die beigefügten Zeichnungen näher beschrieben. Es stellen dar:
- Fig. 1: in schematischer Schaltung einen MOSFET zur Definition von Hauptstromrichtung HS und Nebenstromrichtung NS, wie sie bei Gleichrichterschaltungen nach dem Stand der Technik orientiert sind;
- Fig.2: in schematischer Schaltung einen MOSFET zur Definition von Hauptstromrichtung HS und Nebenstromrichtung NS, wie sie bei einer erfindungsgemäßen Gleichrichterschaltung orientiert sind.
- Fig. 3: eine schematische Darstellung einer erfindungsgemäßen Gleichrichterschaltung;
- Fig.4: ein Schaltbild einer Ausführungsform einer erfindungsgemäßen Gleichrichterschaltung; und
- Fig. 5: in schematischer Darstellung den Verlauf der Transformatorspannung sowie der Gatespannungen der beiden MOSFETs von Fig. 4 über der Zeit.

Fig. 2 zeigt in schematischer Darstellung einen MOSFET mit Hauptstrom- und Nebenstromrichtung HS, NS bei Verwendung des MOSFET in einer erfindungsgemäßen Gleichrichterschaltung. Wie ein Vergleich von Fig. 1 und Fig. 2 deutlich erkennen läßt, ist die Nebenstromrichtung NS identisch geblieben, während jedoch die Hauptstromrichtung HS genau entgegengesetzt verläuft. Der MOSFET von Fig. 2 wird demnach hinsichtlich des ihn durchfließenden Stroms invers betrieben.

Fig. 3 zeigt in schematischer Darstellung eine erfindungsgemäße Gleichrichterschaltung mit einem Übertrager Ü, auf dessen Primärseite eine Primärinduktivität L1 mit einer Spannung UE versorgt wird, bei der es sich um eine Spannung mit einem Wechselspannungsanteil, insbesondere um eine Wechselspannung handelt. Auf der Sekundärseite umfaßt der Übertrager eine erste Sekundärinduktivität L21 und eine zweite Sekundärinduktivität L22. Die Schaltung umfaßt weiterhin in serieller Anordnung zur jeweiligen Sekundärinduktivität einen ersten MOSFET F1, sowie einen zweiten MOSFET F2. Zur besseren Kennzeichnung von Haupt- und Nebenstromrichtung HS, NS wurde bei beiden MOSFET die Bodydiode miteingezeichnet. Die beiden von der jeweiligen Sekundärinduktivität L21, L22 abgekehrten Seiten des jeweiligen MOSFET F1, F2 sind unter Bildung eines ersten Verbindungspunkts VP1 miteinander verbunden. Zwischen dem ersten Verbindungspunkt VP1 und einem zweiten Verbindungspunkt VP2, an dem die beiden Sekundärinduktivitäten miteinander verbunden sind, ist ein Glättungsnetzwerk umfassend eine Induktivität LS und einen Kondensator CS angeordnet. Parallel zum Kondensator CS ist eine Last LA geschaltet, beispielsweise eine Lampe.

Auf der Sekundärseite des Übertragers Ü ist weiterhin eine erste Hilfsinduktivität HL1 und eine zweite Hilfsinduktivität HL2 angeordnet, deren Ausgangsspannung U1 bzw. U2 dazu verwendet wird, um den ersten MOSFET F1 bzw. den zweiten MOSFET F2 über die jeweilige Gate-Elektrode anzusteuern.

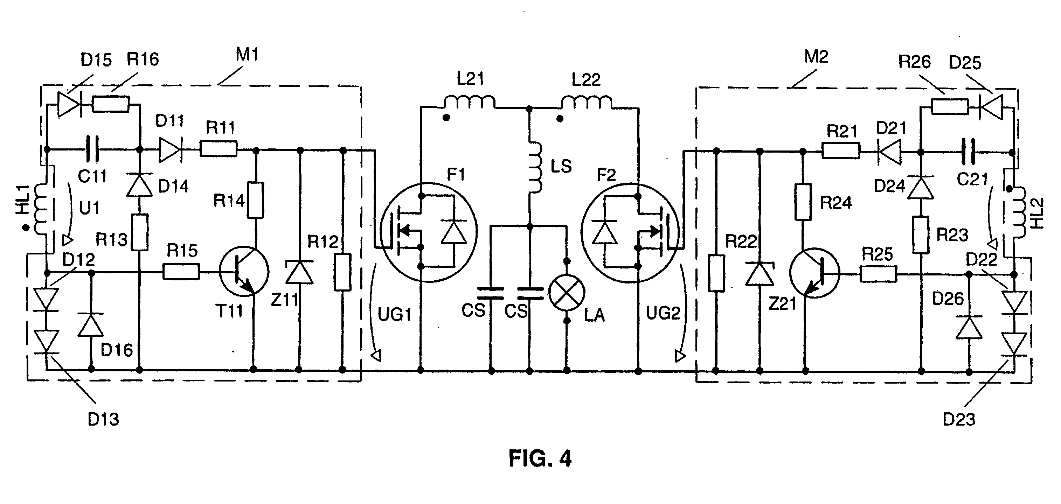

Eine Ausführungsform einer erfindungsgemäßen Gleichrichterschaltung ist in Fig. 4 dargestellt. Hierbei sind Bauelemente, die solchen von Fig. 3 entsprechen, mit denselben Bezugszeichen bezeichnet. Die Primärinduktivität L1 ist nicht dargestellt. Neben den bereits erwähnten Bauteilen L21, L22, LS, LA, CS, F1, F2, HL1, HL2 ist in Fig 4 die Ansteuerschaltung M1 für den MOSFET F1 sowie die Ansteuerschaltung M2 für den MOSFET F2 dargestellt. Deren Funktion soll am Beispiel der Ansteuerschaltung M1 beschrieben werden:

Steigt die Spannung U1 von negativen Werten auf 0 V, treibt sie einen Strom über D16, C11, D11 und R11 an das Gate des MOSFET F1 und lädt das Gate auf etwa die halbe zur Verfügung stehende Spannung auf. Wird die Spannung U1 positiv, wird das Gate auf die volle Spannung aufgeladen. Die Gate-Spannung wird durch die Zenerdiode Z11 auf 18 V begrenzt. Der Widerstand R12 dient zum sicheren Abschließen des Gates, damit keine statischen Aufladungen den MOSFET F1 zerstören. Außerdem dient der Widerstand R12 dazu, das Gate zu entladen, wenn die Ansteuerung gestoppt wird. Wird die Spannung U1 negativ, fließt von der Hilfswicklung HL1 nur ein Strom über D12, D13, R13, D14 und C11. Dabei wird C11 umgeladen und der Transistor T11 schließt über den Widerstand R14 die Gate-Spannung mit einem Schlag kurz. Der Basiswiderstand R15 dient der besseren Entkopplung des Stroms. Sobald das Gate aufgeladen ist, findet ständig eine Entladung über R12 statt. Über D15 und R16 wird das Gate wieder nachgeladen.

Die Ansteuerschaltung M2 weist entsprechende Bauelemente auf und funktioniert entsprechend.

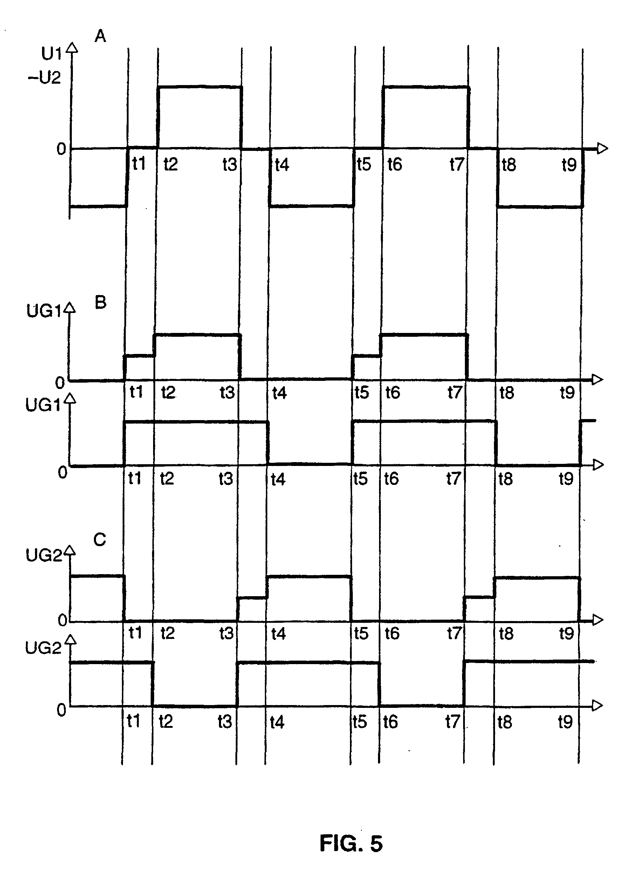

Fig. 5 zeigt die zeitlichen Verläufe einiger ausgewählter Spannungen der Ausführungsform von Fig. 4. In Diagramm A ist schematisch der Spannungsverlauf am Übertrager Ü dargestellt. Der Verlauf ist (von Übertragungsfaktoren abgesehen) für die an der Primärinduktivität L1, an den Sekundärinduktivitäten L21, L22 sowie an den Hilfsinduktivitäten HL1, HL2 abfallende Spannung prinzipiell identisch. Im Hinblick auf die Ansteuerung der beiden MOSFET ist jedoch von wesentlicher Bedeutung der Verlauf der Spannungen U1 und U2. Diagramm A zeigt den Verlauf von U1 und -U2. Diagramm B zeigt den zeitlichen Verlauf der Gate-Spannung UG1 des MOSFET F1, Diagramm C den entsprechenden zeitlichen Verlauf der Gate-Spannung UG2 des MOSFET F2. In Diagramm B bzw. C zeigt die jeweils obere Kurve den zeitlichen Verlauf für eine erste Dimensionierung des jeweiligen Ansteuernetzwerks, die untere Kurve den zeitlichen Verlauf für eine zweite Dimensionierung.

### Zunächst zur ersten Dimensionierung:

Zu erkennen ist, daß bei ansteigender Spannung von negativen Werten zum Zeitpunkt t1 die Spannung UG1 zunächst auf den halben Maximalwert ansteigt und erst zum Zeitpunkt t2, wenn U1 positiv wird, auf den vollen Wert anwächst. Der Zeitraum zwischen t1 und t2, ebenso wie der Zeitraum zwichen t3 und t4, t5 und t6 sowie t7 und t8, ist die sogenannte Totzeit, d.h. der Zeitraum, in dem der Strom vom MOSFET F1 zum MOSFET F2 kommutiert und umgekehrt. Bei der ersten Dimensionierung ist die Gatespannung UG1 zwischen t3 und t4 0 V, d.h. der MOSFET F1 geht in den nichtleitenden Zustand über. Zum Zeitpunkt t5 beginnt ein neuer Zyklus.

Aufgrund der umgekehrten Orientierung der Hilfswicklung HL2 im Vergleich zur Hilfswicklung HL1 verläuft die Spannung U2 invers zur Spannung U1. Dies setzt sich - unter Berücksichtigung des zweistufigen Einschaltvorgangs - bei der Gatespannung UG2 fort. In anderen Worten: Sobald die Spannung U1 von positiven Werten auf 0 zurückgeht, erfolgt ein Sprung der Gate-Spannung UG2 auf den halben Maximalwert, wobei sich ein Sprung auf den vollen Maximalwert anschließt, sobald U1 negativ wird. Wie zu erkennen ist, ist während der Totzeit mindestens einer der beiden MOSFET F1, F2 in den leitenden Zustand geschaltet, d.h. während der Totzeit zwischen t3 und t4 der MOSFET F2, während der Totzeit zwischen t5 und t6 der MOSFET F1, usw..

### Zur zweiten Dimensionierung:

Die jeweils zweite Dimensionierung unterscheidet sich von der ersten Dimensionierung lediglich dadurch, daß sich während der Totzeiten beide MOSFET F1, F2 im leitenden Zustand befinden. Dadurch daß sich mindestens ein MOSFET im leitenden Zustand befindet, ist sichergestellt, daß der jeweilige Strom nicht über die Bodydiode fließt, sondern über den jeweiligen Hauptstrompfad. Zu bemerken ist, daß im Bereich der jeweiligen Totzeit die Ströme, die den jeweiligen MOSFET durchfließen, nur in einem sehr kurzen Zeitbereich fließen und daher auch an der Bodydiode nur zu einer geringen Verlustleistung führen würden.

## Patentansprüche

1. Gleichrichterschaltung mit
einem Übertrager (Ü), der eine Primärseite(L1) und eine Sekundärseite (L21, L22) aufweist, wobei die Primärseite (L1) einen ersten und einen zweiten Eingangsanschluß zum Einkoppeln eines Wechselspannungssignals (UE) aufweist, und die Sekundärseite zwei Sekundärwicklungen (L21, L22) umfaßt, die miteinander und mit einem ersten Ausgangsanschluß (VP2) verbunden sind, wobei die erste und die zweite Sekundärwicklung (L21, L22) mit ihrem anderen Anschluß mit einem ersten Anschluß einer in Flußrichtung angeordneten ersten und zweiten Diode verbunden sind und der zweite Anschluß der ersten und der zweiten Diode miteinander und mit einem zweiten Ausgangsanschluß (VP1) verbunden sind, wobei zwischen den ersten und zweiten Ausgangsanschluß eine Last (LA) koppelbar ist,
wobei die erste und die zweite Diode zumindest innerhalb eines vorgegebenen Zeitbereichs durch einen ersten und einen zweiten MOSFET (F1, F2) realisiert sind, dadurch daß jeder MOSFET (F1, F2) einen Hauptstrompfad mit einer Hauptstromrichtung (HS) und einen zum Hauptstrompfad parallel angeordneten Nebenstrompfad mit einer Nebenstromrichtung (NS) und mit einer darin angeordneten Bodydiode (BD) aufweist, wobei die Hauptstromrichtung (HS) und die Nebenstromrichtung (NS) entgegengesetzt zueinander verlaufen, und der erste und der zweite MOSFET (F1, F2) so betreibbar sind, daß die erste und die zweite Bodydiode (BD) innerhalb des vorgegebenen Zeitbereichs die erste und die zweite Diode realisieren,
**dadurch gekennzeichnet,**
**daß** sie weiterhin eine erste und eine zweite Ansteuerschaltung (M1, M2, HL1, HL2) umfaßt, die ausgelegt sind, den ersten und den zweiten MOSFET (F1, F2) mit Bezug auf den Stromfluß im Hauptstrompfad derart anzusteuern, daß der Stromfluß im Hauptstrompfad in der Nebenstromrichtung (NS) erfolgt.

2. Gleichrichterschaltung nach Anspruch 1,
**dadurch gekennzeichnet,**
**daß** die erste und die zweite Ansteuerschaltung (M1, M2, HL1, HL2) derart betreibbar sind, daß zumindest in einem ersten Zeitbereich der Stromfluß durch den jeweiligen MOSFET (F1, F2) im Hauptstrompfad in der Nebenstromrichtung (NS) und in einem zweiten Zeitbereich im Nebenstrompfad in der Nebenstromrichtung (NS) erfolgt.

3. Gleichrichterschaltung nach Anspruch 2,
**dadurch gekennzeichnet,**
**daß** die erste und die zweite Ansteuerschaltung (M1, M2, HL1, HL2) derart betreibbar ist, daß zumindest in einem dritten Zeitbereich keinerlei Stromfluß durch den jeweiligen MOSFET (F1; F2) stattfindet.

4. Gleichrichterschaltung nach einem der vorhergehenden Ansprüche,
**dadurch gekennzeichnet,**
**daß** die erste und die zweite Ansteuerschaltung (M1, M2, HL1, HL2) eine erste und eine zweite mit dem Übertrager (Ü) verbundene Hilfswicklung (HL1, HL2) umfassen.

5. Gleichrichterschaltung nach 4,
**dadurch gekennzeichnet,**
**daß** die jeweilige Ansteuerschaltung (M1, M2, HL1, HL2) ein zwischen der jeweiligen Hilfswicklung (HL1; HL2) und dem jeweiligen MOSFET (F1; F2) angeordnetes jeweiliges Modifikationsnetzwerk (M1; M2) zum Modifizieren des Ausgangssignals der jeweiligen Hilfswicklung (HL1; HL2) umfaßt.

6. Gleichrichterschaltung nach Anspruch 5,
**dadurch gekennzeichnet,**
**daß** das erste und das zweite Modifikationsnetzwerk (M1; M2) derart ausgelegt sind, daß während eines Umschwingens des Stroms von dem ersten MOSFET (F1) auf den zweiten (F2) und umgekehrt immer mindestens einer der beiden MOSFET (F1; F2) leitend geschaltet ist.

7. Gleichrichterschaltung nach Anspruch 6,
**dadurch gekennzeichnet,**
**daß** das erste und das zweite Modifikationsnetzwerk (M1; M2) derart ausgelegt sind, daß ein Umschalten des ersten und zweiten MOSFET (F1; F2) vom leitenden in den sperrenden Zustand und/oder umgekehrt in wesentlichen in zwei Stufen erfolgt, wobei die erste Stufe mit dem Umschwingen vom leitenden in den sperrenden Zustand und/oder umgekehrt korreliert ist, während die zweite Stufe mit dem leitenden oder sperrenden Zustand des jeweiligen MOSFET (F1; F2) korreliert ist.

## Claims

1. Rectifier circuit having
a transformer (Ü), which has a primary side (L1) and a secondary side (L21,L22), the primary side (L1) having a first and a second input terminal for coupling in an AC voltage signal (UE), and the secondary side comprising two secondary windings (L21,L22) which are connected to one another and to a first output terminal (VP2), the first and the second secondary winding (L21,L22) being connected by their other terminal to a first terminal of a first and second diode disposed in the forward direction, and the second terminal of the first and of the second diode being connected to one another and to a second output terminal (VP1), it being possible for a load (LA) to be coupled between the first and second output terminals,
the first and the second diode being realized by a first and a second MOSFET (F1,F2) at least within a predetermined time range, by virtue of the fact that each MOSFET (F1,F2) has a main current path with a main current direction (HS) and an auxiliary current path - disposed parallel to the main current path - with an auxiliary current direction (NS) and with a body diode (BD) disposed therein, the main current direction (HS) and the auxiliary current direction (NS) running oppositely to one another, and it being possible for the first and the second MOSFET (F1,F2) to be operated in such a way that the first and the second body diode (BD) realize the first and the second diode within the predetermined time range,
**characterized**
**in that** it furthermore comprises a first and a second drive circuit (M1,M2,HL1,HL2), which are designed to drive the first and the second MOSFET (F1,F2) with regard to the current flow in the main current path in such a way that the current flow in the main current path is effected in the auxiliary current direction (NS).

2. Rectifier circuit according to Claim 1,
**characterized**
**in that** the first and the second drive circuit (M1,M2,HL1,HL2) can be operated in such a way that the current flow through the respective MOSFET (F1,F2) is effected in the main current path in the auxiliary current direction (NS) at least in a first time range and in the auxiliary current path in the auxiliary current direction (NS) in a second time range.

3. Rectifier circuit according to Claim 2,
**characterized**
**in that** the first and the second drive circuit (M1,M2,HL1,HL2) can be operated in such a way that no current flow at all takes place through the respective MOSFET (F1;F2) at least in a third time range.

4. Rectifier circuit according to one of the preceding claims,
**characterized**
**in that** the first and the second drive circuit (M1,M2,HL1,HL2) comprise a first and a second auxiliary winding (HL1,HL2) connected to the transformer (Ü).

5. Rectifier circuit according to Claim 4,
**characterized**
**in that** the respective drive circuit (M1,M2,HL1,HL2) comprises a respective modification network (M1;M2) disposed between the respective auxiliary winding (HL1;HL2) and the respective MOSFET (F1;F2) and serving for modifying the output signal of the respective auxiliary winding (HL1;HL2).

6. Rectifier circuit according to Claim 5,
**characterized**
**in that** the first and the second modification network (M1;M2) are designed in such a way that, during a commutation of the current from the first MOSFET (F1) to the second (F2), and vice versa, it is always the case that at least one of the two MOSFETs (F1;F2) is turned on.

7. Rectifier circuit according to Claim 6,
**characterized**
**in that** the first and the second modification network (M1;M2) are designed in such a way that a changeover of the first and second MOSFETs (F1;F2) from the on to the off state and/or vice versa is essentially effected in two stages, the first stage being correlated with the commutation from the on to the off state and/or vice versa, while the second stage is correlated with the on or off state of the respective MOSFET (F1;F2).

## Revendications

1. Circuit redresseur
comportant un transformateur (Ü) qui a un côté primaire (L1) et un côté secondaire (L21, L22), dans lequel le côté primaire (L1) comporte une première et une deuxième borne d'entrée pour l'introduction d'un signal de tension alternative (DE) et le côté secondaire comprend deux enroulements secondaires (L21, L22) qui sont reliés entre eux et à une première borne de sortie (VP2), dans lequel le premier et le deuxième enroulement secondaire (L21, L22) sont reliés par leur autre borne à une première borne d'une première et d'une deuxième diode montées en sens direct et la deuxième borne de la première diode ainsi que la deuxième borne de la deuxième diode sont reliées entre elles et à une deuxième home de sortie (VP1) et dans lequel une charge (LA) peut être branchée entre la première borne de sortie et la deuxième borne de sortie,
dans lequel la première et la deuxième diode sont réalisées au moins pendant un intervalle de temps prédéterminé par un premier et un deuxième MOSFET (F1, F2) du fait que chaque MOSFET (F1, F2) comporte un trajet de courant principal avec un sens de courant principal (HS) et un trajet de courant auxiliaire monté en parallèle avec le trajet de courant principal et avec un sens de courant auxiliaire (NS) et avec une diode body (BD) montée à l'intérieur, le sens de courant principal (HS) et le sens de courant auxiliaire (NS) étant opposés l'un à l'autre et le premier et le deuxième MOSFET (F1, F2) pouvant être commandés de telle sorte que la première et la deuxième diode body (BD) réalisent la première et la deuxième diode pendant l'intervalle de temps prédéterminé,
**caractérisé par le fait qu'**il comprend en outre un premier et un deuxième circuit de commande (M1, M2, HL1, HL2) qui sont conçus pour commander le premier et le deuxième MOSFET (F1, F2) par rapport au flux de courant dans le trajet de courant principal de telle sorte que le flux de courant dans le trajet de courant principal s'effectue dans le sens de courant auxiliaire (NS).

2. Circuit redresseur selon la revendication 1,
**caractérisé par le fait que** le premier et le deuxième circuit de commande (M1, M2, HL1, HL2) peuvent être commandés de telle sorte que, au moins pendant un premier intervalle de temps, le flux de courant à travers le MOSFET (F1, F2) respectif s'effectue dans le trajet de courant principal dans le sens de courant auxiliaire (NS) et, pendant un deuxième intervalle de temps, dans le trajet de courant auxiliaire dans le sens de courant auxiliaire (NS).

3. Circuit redresseur selon la revendication 2,
**caractérisé par le fait que** le premier et le deuxième circuit de commande (M1, M2, HL1, HL2) peuvent être commandés de telle sorte que, au moins pendant un troisième intervalle de temps, il n'y a aucun flux de courant à travers le MOSFET (F1 ; F2) respectif.

4. Circuit redresseur selon l'une des revendications précédentes,
**caractérisé par le fait que** le premier et le deuxième circuit de commande (M1, M2, HL1, HL2) comprennent un premier et un deuxième enroulement auxiliaire (HL1, HL2) reliés au transformateur (Ü).

5. Circuit redresseur selon la revendication 4,
**caractérisé par le fait que** le circuit de commande respectif (M1, M2, HL1, HL2) comprend un réseau de modification (M1 ; M2) respectif qui est monté entre l'enroulement auxiliaire (HL1 ; HL2) respectif et le MOSFET (F1 ; F2) respectif et qui sert à modifier le signal de sortie de l'enroulement auxiliaire (HL1 ; HL2) respectif.

6. Circuit redresseur selon la revendication 5,
**caractérisé par le fait que** le premier et le deuxième réseau de modification (M1 ; M2) sont conçus de telle sorte que, pendant un basculement du courant du premier MOSFET (F1) au deuxième (F2) et inversement, il y a toujours au moins l'un des deux MOSFET (F1 ; F2) qui est branché conducteur.

7. Circuit redresseur selon la revendication 6,
**caractérisé par le fait que** le premier et le deuxième réseau de modification (M1 ; M2) sont conçus de telle sorte qu'une commutation du premier et du deuxième MOSFET (F1 ; F2) de l'état conducteur à l'état bloquant et/ou inversement s'effectue globalement en deux étapes, la première étape étant corrélée avec le basculement de l'état conducteur à l'état bloquant et/ou inversement tandis que la deuxième étape est corrélée avec l'état conducteur ou bloquant du MOSFET (F1 ; F2) respectif.
